# EUROPÄISCHE PATENTSCHRIFT

(11) **EP 3 348 386 B1**
(45) Veröffentlichungstag und Bekanntmachung des Hinweises auf die Patenterteilung: **19.05.2021**
(21) Anmeldenummer: 18150214.7
(22) Anmeldetag: 03.01.2018
(51) Int. Cl.: B29C 70/44, B29C 70/54, B32B 38/00

(54) **FLIESSHILFE FÜR EINE INFUSIONSANORDNUNG ZUM INFILTRIEREN EINES HARZES IN EIN FASERMATERIAL**
FLOW DISTRIBUTION MEDIUM FOR AN INFUSION ASSEMBLY FOR INFILTRATION OF A RESIN INTO A FIBRE MATERIAL
ÉLÉMENT FACILITANT L'ÉCOULEMENT POUR UN DISPOSITIF D'INFUSION PERMETTANT L'INFILTRATION D'UNE RÉSINE DANS UN MATÉRIAU FIBREUX

(30) Priorität: 16.01.2017 DE 102017100740
(43) Veröffentlichungstag der Anmeldung: 18.07.2018
(73) Patentinhaber: Gerolymos, Eleftherios, 80798 München (DE)
(72) Erfinder: Gerolymos, Eleftherios, 80798 München (DE)
(74) Vertreter: Lindner Blaumeier Patent- und Rechtsanwälte

(56) Entgegenhaltungen:
- EP-A1- 2 604 413
- WO-A1-2013/101354
- DE-A1-102014 116 848
- FR-A1- 2 868 008

## Beschreibung

Die Erfindung betrifft eine Fließhilfe für eine Infusionsanordnung zum Infiltrieren eines Harzes in ein Fasermaterial nach Anspruch 1 sowie ein Verfahren zur Infiltration eines Fasermaterials nach Anspruch 14.

Fasermaterial beispielsweise in Form eines Glasfaser- oder Kunststofffasergewebes wird zur Herstellung von Faserverbundbauteilen in an sich bekannter Weise mit einem Harz, beispielsweise einem Epoxidharz infiltriert, also getränkt. Solche Faserverbundbauteile kommen in unterschiedlichsten Formen und Funktionen zur Anwendung. Zur Herstellung eines solchen Faserverbundbauteils wird eine Infusionsanordnung verwendet, umfassend eine Form bzw. ein formgebendes Werkzeug, über die bzw. das die zwei- oder dreidimensionale Geometrie des herzustellenden Faserverbundbauteils definiert wird. In diese Form wird das Fasermaterial eingelegt. Ferner wird eine Fließhilfe eingebracht, die dazu dient, das in die Form eingebrachte, fluide Harz zu verteilen, so dass eine homogene Infiltration respektive Durchtränkung möglich ist. Der Aufbau, also die Form, wird sodann mit einer geeigneten Hülle oder dergleichen gasdicht verschlossen. Im Inneren dieser Infusionsanordnung kann sodann zum Infiltrieren ein Unterdruck aufgebaut werden, wozu Luft aus dem Inneren abgesaugt wird. Die Zufuhr des Harzes erfolgt beispielsweise ebenfalls durch diese Umhüllung, wobei die Zufuhr unter Druck erfolgen kann. Es handelt sich also in diesem Fall um eine Vakuuminfusionsmethode. Wesentlich für die Eigenschaften des herzustellenden Faserverbundbauteils ist die gleichmäßige Verteilung und Einbringung des Harzes in das Fasermaterial, das heißt, dass dieses möglichst gleichmäßig getränkt wird. Aus diesem Grund wird die Fließhilfe eingebracht, die, bezogen auf die Infiltrationsrichtung des Harzes, dem Fasermaterial vorgeschaltet ist, so dass das Harz die Fließhilfe durchdringen muss, um das Fasermaterial infiltrieren zu können. Eine solche Fließhilfe ist beispielsweise in DE 10 2013 006 940 A1 beschrieben. Sie besteht aus zwei unterschiedlichen, harzdurchlässigen Lagen, die gemäß der dortigen Lehre randseitig miteinander verbunden sind, so dass sich zwischen ihnen ein Fließraum ergibt, in den das Harz eingebracht wird und aus dem heraus es durch eine geeignete Perforation zum Fasermaterial gelangen kann. Die beiden Lagen können beispielsweise aus einem Folien- oder Textilmaterial bestehen, wobei zwei zwischen den Lagen auch definierte Strömungskanäle für das Harz ausgebildet sein können. Auch kann zwischen den Lagen eine zusätzliche Verteilerstruktur, beispielsweise ein Faservlies oder eine formstabile Struktur, eingebracht sein. Der Aufbau einer solchen Fließhilfe ist jedoch sehr aufwendig. Weitere Fließhilfen sind aus DE102014116848 und WO2013101354 bekannt.

Alternativ dazu ist es bekannt, separate, einzelne Lagen auf dem Fasermaterial anzuordnen, nämlich zum einen ein unmittelbar auf dem Fasermaterial aufliegendes Abreißgewebe, das mitunter auch erst in einem späteren Bearbeitungsprozess des Faserverbundbauteils von der Oberfläche abgerissen wird, gefolgt von einer Trennfolie, die ihrerseits keinen Haftverbund mit dem Harz eingeht, und diese wiederum gefolgt von einer Verteilerstruktur wie beispielsweise einem Gitter oder dreidimensionalen Gewebe oder dergleichen. Dabei ist zum einen die Anordnung der einzelnen Lagen, die manuell verbracht werden, umständlich. Des Weiteren wird das Abreißgewebe, also die unmittelbar auf dem Fasermaterial zu platzierende Lage, vor der Applikation von dem Verarbeiter mit einem Klebemittel besprüht, wonach es erst eingebracht und auf dem Fasermaterial, an dem es über das Klebemittel haftet, positioniert wird. Auch diese Art und Weise des Herrichtens der Infusionsanordnung für den Infiltrationsprozess ist aufwendig.

Der Erfindung liegt damit das Problem zugrunde, eine demgegenüber verbesserte Fließhilfe anzugeben.

Zur Lösung dieses Problems ist erfindungsgemäß eine Fließhilfe für eine Infusionsanordnung zum Infiltrieren eines Harzes in ein Fasermaterial vorgesehen, die sich dadurch auszeichnet, dass wenigstens zwei aufeinander liegende, verschiedenartige und harzdurchlässige Lagen, die im Bereich ihrer aufeinander liegenden Flächen miteinander verbunden sind, vorgesehen sind, wobei eine Lage ein Abreißgewebe ist, das an seiner frei liegenden Fläche abschnittsweise oder vollflächig mit einem Klebemittel, das mit einer abziehbaren Schutzlage belegt ist, oder das nach der Montage der Fließhilfe aktivierbar ist, belegt ist.

Die erfindungsgemäße bahnartige Fließhilfe zeichnet sich dadurch aus, dass sie mehrlagig ist, bestehend aus wenigstens zwei aufeinander liegenden Lagen, die verschiedenartiger Natur sind, jedoch beide harzdurchlässig sind. Das heißt, dass das Harz durch beide Lagen hindurchtreten kann. Die beiden Lagen sind nun im Bereich ihrer aufeinander liegenden Flächen miteinander verbunden, also auf einfache Weise miteinander verklebt, was maschinell erfolgen kann, indem eine Lage in einer Beschichtungsvorrichtung mit einem Klebemittel belegt wird, wonach die beiden Lagen zusammengeführt werden. Dies ermöglicht es, die verwendete Menge an Klebemittel exakt zu bemessen, so dass ein hinreichender Haftverbund gegeben ist, der die beiden Lagen aneinanderhält, so dass sie ohne weiteres gemeinsam verarbeitet und in die Form eingebracht werden können. Der Lagenverbund wird hierbei nicht allzu fest gestaltet, da dieser Verbund letztlich lediglich dazu dient, sie leicht aneinander zu fixieren, so dass sie gemeinsam verarbeitet werden können. Diese Verarbeitung gestaltet sich nun wesentlich einfacher als insbesondere beim bisherigen Einlegen separater Lagen, da eben zwei Lagen gleichzeitig eingebracht werden können.

Erfindungsgemäß ist nun eine dieser Lagen ein Abreißgewebe, also das Gewebe, das unmittelbar mit dem Fasermaterial in Verbindung steht. Dieses Abreißgewebe ist nun erfindungsgemäß an seiner frei liegenden Seite abschnittsweise oder vollflächig mit einem Klebemittel versehen, also bereits werkseitig vorkonfektioniert mit dem Klebemittel beschichtet. Zum Einbringen ist es also nicht mehr erforderlich, dass der Verarbeiter das Abreißgewebe manuell mit einem Klebemittel belegt, üblicherweise besprüht, vielmehr ist dieses bereits vorkonfektioniert aufgebracht. Dies bietet eine Reihe von Vorteilen. Zum einen ist die aufgebrachte Klebemittelmenge, da diese natürlich auf einfache Weise maschinell aufgebracht werden kann, stets exakt und gleichbleibend von Fließhilfe zu Fließhilfe definiert, da die Klebemittelmenge im Rahmen der maschinellen Herstellung standardisiert appliziert wird. Auch kommt der Verarbeiter nicht in Kontakt mit etwaigen aus dem manuellen Aufsprühen des Klebemittels resultierenden Dämpfen, einer besonderen Luftabsaugung und Ähnliches bedarf es ebenfalls nicht. Schließlich entfällt dieser manuelle Klebemittelauftrag innerhalb der Prozesskette, so dass auch das Einbringen der Fließhilfe wesentlich schneller und einfacher von statten gehen kann.

Das Klebemittel kann ein Klebemittel sein, das von Haus aus, also im Verarbeitungszustand, bereits adhäsive Eigenschaften aufweist, mithin also leicht klebrig ist. In diesem Fall ist es mit einer abziehbaren Schutzlage, beispielsweise einem Silikonpapier oder ähnlichem, belegt. Alternativ kann auch ein nach der Montage der Fließhilfe aktivierbares Klebemittel konfektioniert aufgebracht sein, das im Ausgangszustand noch keine adhäsiven Eigenschaften besitzt, diese jedoch nach der Montage erlangt, also klebrig wird und an dem Fasermaterial haftet, wenn beispielsweise der Infiltrationsprozess beginnt. Hierauf wird nachfolgend noch eingegangen.

Insgesamt ermöglicht die Fließhilfe folglich ein wesentlich einfacheres und schnelleres Arbeiten, verglichen mit bisher bekannten Möglichkeiten im Rahmen der Einbringung der nötigen Lagen für eine Harzinfiltration.

Wie beschrieben ist eine Lage ein Abreißgewebe. Bei der anderen, weiteren Lage kann es sich entweder um eine dreidimensionale Lage handeln, durch die das Harzmaterial quasi hindurchströmen kann, so dass es sich innerhalb der Fließhilfe bzw. Infusionsanordnung verteilen kann. Diese Lage dient also zur Verteilung und Vergleichmäßigung des Harzes. In diesem Fall ist die dreidimensionale Lage unmittelbar mit dem Abreißgewebe über eine Klebung verbunden. Eine solche Fließhilfe wird beispielsweise verwendet, wenn die Abreißgewebelage unmittelbar nach der Infiltration respektive dem Aushärten abgezogen wird, somit also nicht am Faserverbundbauteil zumindest temporär verbleiben soll.

Alternativ zur Verwendung einer solchen dreidimensionalen Lage kann es sich bei der weiteren Lage auch um eine Trennfolie handeln, die mit dem Harz keine haftende, feste Verbindung eingeht. Diese Trennfolie ist über die Klebeschicht ebenfalls nur leicht mit dem Abreißgewebe verbunden, kann also ohne weiteres von diesem nach der Infiltration und dem Aushärten des Harzes abgezogen werden. Sie löst sich vom Abreißgewebe, das am Faserverbundbauteil verbleibt.

Neben diesem, im einfachsten Ausgestaltungsfall der Erfindung vorgesehenen, zweidimensionalen Aufbau der Fließhilfe ist es denkbar, dass die Fließhilfe auch eine weitere harzdurchlässige Lage aufweist, dass also mithin drei aufeinander liegende, verschiedenartige und harzdurchlässige Lagen vorgesehen sind, die über eine Verklebung miteinander verbunden sind. Dabei kann die erste Lage eine dreidimensionale Lage sein, während die zweite Lage eine mit der dreidimensionalen Lage im Bereich ihrer aufeinander liegenden Flächen verbundene Trennfolie ist, während die dritte Lage das Abreißgewebe ist, das mit der Trennfolie verbunden ist. Diese vorkonfektionierte Fließhilfe kombiniert also alle drei üblicherweise manuell eingebrachten Lagen zu einem gemeinsamen Element respektive Flächenbauteil, das auf einfache Weise verarbeitbar ist. Gemäß dieser Erfindungsausgestaltung ist also keine der benötigten Lagen separat zu verlegen, vielmehr sind alle drei Lagen der erfindungsgemäßen Fließhilfe vereint, so dass mit Einbringen der Fließhilfe letztlich die Lagenanordnung abgeschlossen ist.

Insbesondere unter Verwendung dieser dreilagigen Fließhilfe ist ein automatisierter Verlegevorgang denkbar, wobei dieser sogar das Zuschneiden der Fließhilfe auf die benötigte Größe/Geometrie beinhalten kann.

Im Rahmen der Herstellung der Fließhilfe ist ebenfalls ein automatisiertes Arbeiten möglich, da es ohne weiteres technisch realisierbar ist, die einzelnen, aufeinander zu bringenden Lagen mit dem entsprechenden Kleber für deren Klebeverbund zu belegen und anschließend die Lagen übereinander zu bringen und miteinander zu verkleben. Wiederum kann im Rahmen dieser automatisierten Herstellung die Klebemittelmenge, die auf die einzelnen Lagen aufgebracht wird, um sie miteinander zu verbinden, und die auf das Abreißgewebe zum Verkleben mit dem Fasermaterial aufgebracht wird, exakt dosiert werden, so dass mit möglichst wenig, jedoch noch ausreichend viel Kleber gearbeitet wird und standardisierte Fließhilfen hergestellt werden können.

Kommt, alternativ zum vom Haus aus adhäsiven Klebemittel, ein aktivierbares Klebemittel zum Einsatz, so kann es sich hierbei um einen thermisch aktivierbaren

Kleber oder um einen durch Druck aktivierbaren Kleber handeln. Ein thermisch aktivierbarer Kleber wird dann aktiviert, also haftfähig, wenn er hinreichend erwärmt wird. Dies ist vorliegend möglich, da mit dem Infiltrieren des Harzes eine exotherme Reaktion einsetzt, wenn nicht das Harz selbst, sei es ein Epoxidharz, sei es ein Polyesterharz oder dergleichen, bereits eine hinreichende Verarbeitungstemperatur aufweist. Alternativ kann das Klebemittel auch durch Druck aktivierbar sein. Wird also innerhalb des Infusionsaufbaus ein Unterdruck angelegt und beispielsweise optional das Harz mit leichtem Überdruck eingebracht, so kommt es dazu, dass die Fließhilfe gegen das Fasermaterial gedrückt wird. Hierbei entsteht ein hinreichend hoher Flächendruck, der zur Aktivierung des Klebemittels führt. Dieses wird also haftend respektive klebrig, so dass es an der Fließhilfe haftet. Ein Aufschwimmen des Fasermaterials oder der Fließhilfe wird hierdurch ebenfalls wirksam verhindert.

Das Abreißgewebe selbst ist beispielsweise ein textiles Kunststoffgewebe, das z. B. aus PE, HDPE, LDPE, PA, PP, PES, PTFE, FEP, ETFE, PFA, PSU, PPS oder einem Polyimid ist, wobei diese Aufzählung nicht abschließend ist. Die Verwendung von Hochtemperaturkunststoffen wie flourhaltige Thermoplaste (z.B. PTFE, FEP, ETFE, PFA), PSU, PES, PPS oder einem Polyamid, die eine sehr geringe Oberflächenenergie und/oder eine sehr geringe Adhäsionsneigung gegenüber den eingesetzten Harzes aufweisen, ermöglicht das leichte Entfernen der Fließhilfe, sowohl im trocknen als auch im nassen Zustand des Bauteils. Somit kann die Fließhilfe wiederverwendet werden.

Die dreidimensionale Lage kann ein textiles Kunststoffgewebe, Kunststoffgewirke oder Kunststoffnetz sein. Es hat also einen mehr oder weniger hohen dreidimensionalen Aufbau und ist derart gestaltet, dass es ein Fließen des beispielsweise unter Druck eingebrachten Harzes sowohl in der Ebene, in der es verlegt ist, als auch senkrecht hierzu, also durch die dreidimensionale Lage hindurch, ermöglicht. Auch dieses Kunststoffgewebe, Kunststoffgewirke oder Kunststoffnetz kann beispielsweise aus PE, HDPE, LDPE, PA, PP, PES, PTFE, FEP, ETFE, PFA, PSU, PPS oder einem Polyimid sein, wobei auch diese Aufzählung nicht abschließend ist.

Ist eine Trennfolie vorgesehen, so kann auch diese beispielsweise eine Kunststofffolie sein. Diese Kunststofffolie ist über ihre Fläche perforiert, beispielsweise durch eine Vielzahl kleiner Öffnungen oder eine entsprechend niedrigere Anzahl größerer Öffnungen, wobei die Öffnungen natürlich unterschiedlichster Geometrie sein können. Sie kann ebenfalls beispielsweise aus PE, HDPE, LDPE, PA, PP, PES, PTFE, FEP, ETFE, PFA, PSU, PPS oder einem Polyimid sein, wobei auch diese Aufzählung nicht abschließend ist.

In Weiterbildung der Erfindung kann vorgesehen sein, dass die Fließhilfe an allen Seiten gleichmäßig beschnitten ist. Die Fließhilfe weist also gleichmäßige Ränder auf, an denen alle Lagen, seien es zwei Lagen, seien es drei Lagen, gemeinsam enden. Alternativ ist es möglich, dass an einer oder mehreren Seiten der Fließhilfe das Abreißgewebe sich über die eine oder die beiden weiteren Lagen hinaus erstreckt und die Fließhilfe an den übrigen Seiten beschnitten ist. Gemäß dieser Erfindungsausgestaltung ist also das Abreißgewebe an einer oder mehreren Seiten etwas größer als die eine oder die beiden anderen, die Fließhilfe definierenden Lagen. Dieser überstehende Abschnitt ermöglicht ein erleichtertes Greifen des Abreißgewebes zum späteren Abreißen, unabhängig davon, ob das Abreißgewebe und damit die Fließhilfe nach der Herstellung des Faserverbundbauteils, also direkt nach dem Infiltrationsvorgang, insgesamt abgerissen werden soll, oder erst später, das heißt, dass die Trennfolie/dreidimensionale Gewebe schon zuvor von der Abreißfolie abgezogen wurden und lediglich diese noch am Kunststoffverbundbauteil verblieben ist. Der Verarbeiter muss also folglich lediglich den überstehenden Abreißgewebeabschnitt greifen und kann sodann das Abreißgewebe insgesamt abziehen.

Neben der Fließhilfe selbst betrifft die Erfindung ferner eine Infusionsanordnung umfassend einen formgebenden Träger zur Aufnahme des zu infiltrierenden Fasermaterials, eine Umhüllung zum vakuumdichten Abdecken des Trägers nach Auf- oder Einbringen des Fasermaterials, sowie eine mit dem Fasermaterial über die Klebeschicht zu verbindende oder verbundene Fließhilfe der beschriebenen Art.

Des Weiteren betrifft die Erfindung ein Verfahren zur Infiltration eines Fasermaterials mit einem Harz zur Herstellung eines Faserverbundteils mittels einer Infusionsanordnung der vorstehend beschriebenen Art, wobei auf dem auf den Träger der Infusionsanordnung auf- oder eingebrachten Fasermaterial eine Fließhilfe der ebenfalls vorstehend beschriebenen Art über das Klebemittel aufgebracht und fixiert ist, wonach nach Erzeugen eines Vakuums im Innenraum der Infusionsanordnung und/oder unter Überdruck ein Harz eingebracht und über die Fließhilfe verteilt und zum Fasermaterial geführt wird. Es kann hier also mit einem Vakuum im Innenraum, mit einem Überdruck beim Einbringen des Harzes oder mit beiden pneumatischen Varianten gearbeitet werden, um das Harz einzubringen und zu verteilen. Überschüssiges Harz wird abgezogen. Anschließend härtet das Harz aus, so dass das Kunststofffaserverbundbauteil bestehend aus dem Fasermaterial und der dieses einbettenden Harzmatrix gebildet ist.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine perspektivische Prinzipdarstellung einer erfindungsgemäßen dreidimensionalen Fließhilfe,
- Fig. 2: eine Schnittansicht durch die Fließhilfe aus Fig. 1,
- Fig. 3: eine Prinzipdarstellung einer erfindungsgemäßen Infusionsanordnung,
- Fig. 4: eine Anordnung zweier Fließhilfen einer zweiten Ausführungsform nebeneinander,
- Fig. 5: eine Prinzipdarstellung einer erfindungsgemäßen Fließhilfe einer dritten Ausführungsform, und
- Fig. 6: eine Prinzipdarstellung einer erfindungsgemäßen Fließhilfe einer sechsten Ausführungsform.

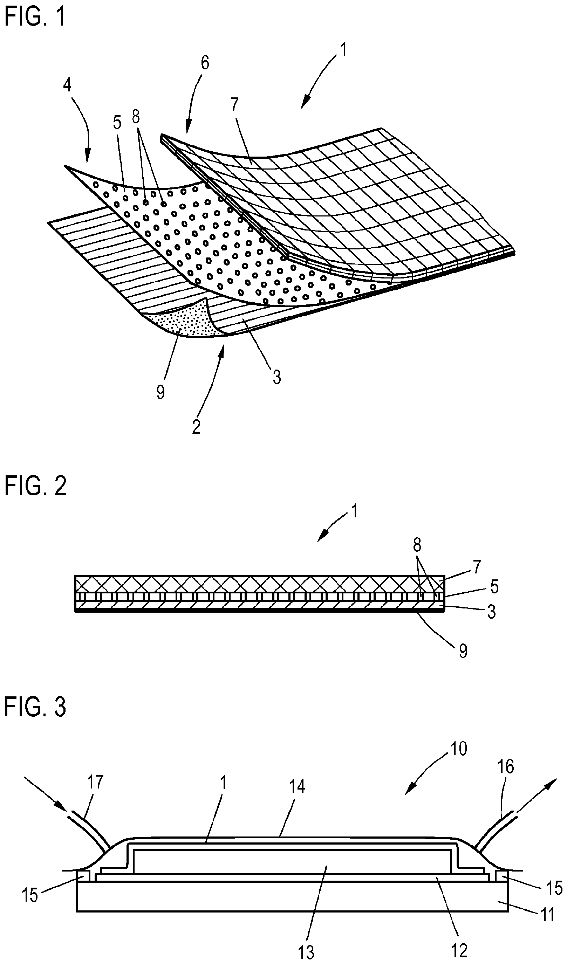

Fig. 1 zeigt eine erfindungsgemäße Fließhilfe 1 einer ersten Ausführungsform, die zum Infiltrieren eines Harzes in ein Fasermaterial mittels einer entsprechenden Infusionsanordnung dient.

Die in Fig. 1 gezeigte Fließhilfe 1 besteht aus drei aufeinanderliegenden, verschiedenartigen und harzdurchlässigen Lagen, nämlich einer ersten Lage 2 in Form eines Abreißgewebes 3, einer zweiten Lage 4 in Form einer perforierten Trennfolie 5 sowie einer dritten Lage 6 in Form einer dreidimensionalen Lage 7. Alle drei Lagen 2, 4, 6 sind miteinander verklebt, das heißt, dass sich zwischen den Lagen jeweils eine sehr dünne, möglichst wenig Klebematerial umfassende Klebeschicht befindet. Die Verklebung erfolgt dabei innerhalb der aufeinanderliegenden Flächen, wobei die Verklebung entweder vollflächig, also über die gesamte Länge und Breite erfolgen kann, oder nur lokal respektive punktuell. Ziel dieser Verklebung ist lediglich eine leichte, jedoch ausreichende Fixierung der drei Lagen 2, 4 und 6 aneinander, die Fließhilfe 1 selbst bleibt natürlich harzdurchlässig.

Bei dem Abreißgewebe 3 handelt es sich um ein geeignetes textiles Kunststoffgewebe, beispielsweise aus PE, HDPE, LDPE, PA, PP, PES, PTFE, FEP, ETFE, PFA, PSU, PPS oder einem Polyimid. Die Trennfolie ist bevorzugt eine Kunststofffolie, beispielsweise bestehend aus PE, HDPE, LDPE, PA, PP, PES, PTFE, FEP, ETFE, PFA, PSU, PPS oder einem Polyimid. Sie ist mit Perforationsöffnungen 8 versehen, so dass Harz durch sie hindurch dringen kann. Derartige Perforationen sind bei dem Abreißgewebe 3 nicht erforderlich, da diese als Gewebe ohnehin harzdurchlässig ist.

Die dreidimensionale Lage 7 schließlich ist ein Kunststoffgewebe, Kunststoffgewirke oder Kunststoffnetz, ebenfalls aus PE, HDPE, LDPE, PA, PP, PES, PTFE, FEP, ETFE, PFA, PSU, PPS oder einem Polyimid. Sie ist als dreidimensionale Lage derart ausgeführt, dass eingebrachtes Harz, das durch die Fließhilfe 1 hindurchdringen soll, innerhalb dieser Lagenebene sowohl in Längs- und Querrichtung, also letztlich horizontal als auch vertikal dazu fließen kann. Die Harzströmung in Horizontalrichtung dient der Verteilung und Vergleichmäßigung, die Harzströmung in vertikaler Richtung hierzu dient sodann dem eigentlichen Infiltrationsvorgang, nachdem das Harz zusätzlich dann die Trennfolie 5 respektive deren Perforationsöffnungen 8 und schließlich das Abreißgewebe 3 durchdringt.

Das Abreißgewebe 3 schließlich ist an seiner Unterseite mit einem Klebemittel 9 belegt, wobei dieser Klebemittelauftrag über die gesamte Fläche erfolgen kann, oder ebenfalls nur lokal oder punktuell vorgesehen sein kann. Über dieses Klebemittel 9 erfolgt die Verklebung der Fließhilfe 1 mit dem Fasermaterial, das zu infiltrieren ist, worauf nachfolgend noch eingegangen wird. Das Klebemittel 9 wird selbstverständlich so aufgebracht, dass es das Abreißgewebe 3 nicht dicht verschließt, nachdem dieses nach wie vor harzdurchlässig sein soll. Der Klebstoffauftrag wird so bemessen, dass noch eine hinreichende Durchlässigkeit gegeben ist, gleichwohl aber ein Verkleben der Fließhilfe 1 mit dem Fasermaterial möglich ist.

Bei dem Klebemittel 9 kann es sich um einen von Haus aus adhäsiven, also klebrigen Kleber handeln, der, wenngleich hier nicht dargestellt, mit einer Schutzfolie abgedeckt ist, beispielsweise einem Silikonpapier, das vor dem Verlegen der bahnförmigen Fließhilfe 1 abgezogen wird. Alternativ dazu kann es sich bei dem Klebemittel 9 auch um ein thermisch oder über Druck aktiveres Klebemittel handeln, das also seine adhäsiven, klebrigen Eigenschaften erst entwickelt, wenn es eine hinreichende Temperatur erreicht hat oder hinreichend Druck gegeben ist.

Die Fließhilfe 1 kann als Bahnmaterial, gegebenenfalls auch auf Rolle gewickelt, automatisiert hergestellt werden. Es ist hierbei lediglich erforderlich, die einzelnen Lagen einerseits mit dem jeweils benötigten Klebemittel zu beschichten respektive dieses aufzubringen und sodann die Lagen zusammenzuführen und miteinander zu verbinden. Eine Klebemittelmenge von 2 - 5 g/m² pro Schicht ist ausreichend. Dies kann automatisiert erfolgen, was den besonderen Vorteil hat, dass die verwendeten Klebemittelmengen stets exakt und gleichbleibend in der Dosierung bemessen werden. Dies hat den Vorteil, dass quasi standardisierte, also stets gleiche Fließhilfen hergestellt werden können. Dabei wird die Fließhilfe 1 vorkonfektioniert hergestellt, das heißt, dass auch das Klebemittel 9 bereits werkseitig aufgebracht ist, dieses muss also nicht mehr vor Ort beim Verlegen der Fließhilfe 1 appliziert werden.

Fig. 2 zeigt eine Schnittansicht durch die Fließhilfe 1 aus Fig. 1, wobei die verschiedenen Lagen in Form des Abreißgewebes 3, der Trennfolie 5 mit ihren Perforationsöffnungen 8 sowie der dreidimensionalen Lage 7 in Form eines Kunststoffgewebes, Kunststoffgewirkes oder Kunststoffnetzes gezeigt sind. Die einzelnen, die Lagen untereinander verbindenden Klebemittelschichten sind nicht näher dargestellt, gezeigt ist lediglich die Klebeschicht des Klebemittels 9 an der Unterseite des Abreißgewebes 3.

Fig. 3 zeigt in Form einer Prinzipdarstellung eine Infusionsanordnung 10 zur Herstellung eines Faserverbundbauteils. Diese umfasst zum einen eine Form 11, also ein formgebendes Werkzeug mit einer Trennplatte 12, beispielsweise aus PTFE, die keinen Haftverbund zum Harz, das mit ihr in Berührung kommt, eingeht. Auf diese Platte 12, die Teil der Form 11 ist, ist das Fasermaterial 13 aufgelegt, das zu infiltrieren ist. Das Fasermaterial 13 ist mit einer erfindungsgemäßen Fließhilfe 1, die hier nur dem Grunde nach dargestellt ist, abgedeckt. Die Fließhilfe 1 ist über das Klebemittel 9 auf dem Fasermaterial 13 aufgeklebt, also fixiert. Das Verlegen der Fließhilfe 1 ist also ein einmaliger Vorgang, mit dem Verlegen der Fließhilfe 1 sind sämtliche benötigten Lagen verlegt, da sie alle benötigten Lagen umfasst und ein einteiliges, einfach handhabbares Arbeitsmittel darstellt. Das Verlegen kann sogar bei Bedarf automatisiert erfolgen.

Gezeigt ist des Weiteren eine vakuumdichte Umhüllung 14, die an der Form 11 über entsprechende klebende Dichtmittel 15 wie Butylbänder oder Ähnliches fixiert ist.

Über eine geeignete, hier nur dem Grunde nach dargestellte Vakuumerzeugungseinrichtung 16 kann im Inneren dieser Infusionsanordnung, die quasi ein Infusionsvolumen umfasst, ein Unterdruck erzeugt werden, während über eine ebenfalls nur prinzipiell dargestellte Zuführeinrichtung 17 das zu infiltrierende Harz, gegebenenfalls unter leichtem Überdruck, eingebracht werden kann. Das Harz wird über die Fließhilfe 1 respektive die dreidimensionale Lage 7 über die gesamte Länge und Breite verteilt, es durchdringt die Fließhilfe 1 in Richtung des Fasermaterials 13 und infiltriert dieses sodann, durchtränkt es also. Nach Beendigung des Infiltrationsvorgangs wird überschüssiges Harz abgezogen, anschließend kann die vakuumdichte Umhüllung 14 entnommen werden, wonach das Harz endgültig aushärtet. Schließlich kann die Fließhilfe 1 in Teilen abgezogen werden, wobei das Abreißgewebe 3 am Faserverbundbauteil verbleibt, oder sie kann insgesamt einschließlich des Abreißgewebes 3 abgezogen werden.

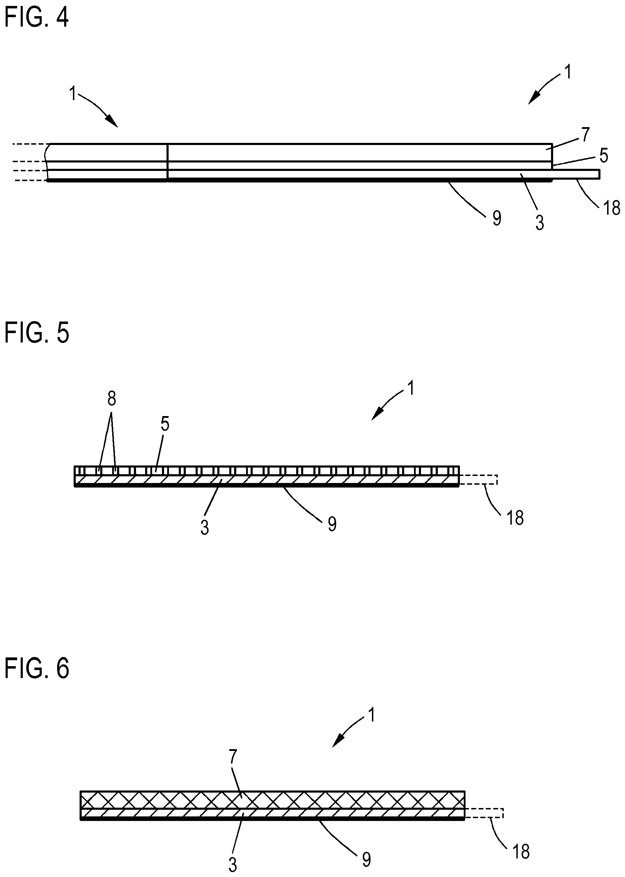

Fig. 4 zeigt eine alternative Ausführungsform der Fließhilfe 1 aus Fig. 3, die also ebenfalls einen dreilagigen Aufbau aufweist, umfassend das Abstandsgewebe 3 mit dem Klebemittel 9, die Trennfolie 5 sowie die dreidimensionale Lage 7. Wie die Schnittansicht zeigt, steht an einer Seite der Fließhilfe 1 das Abstandsgewebe 3 mit einem vorzugsweise unterseitig nicht mit Klebemittel 9 belegten Gewebeabschnitt 18 etwas weiter hervor. Dieser Gewebeabschnitt 18 dient dazu, das Abstandsgewebe 3 zu einem späteren Zeitpunkt greifen zu können, um es abzureißen. Die Fließhilfe 1 wird so verlegt, dass der Klebeabschnitt 18 nicht in die Harzmatrix eingebettet wird.

Die gegenüberliegende Seite ist ersichtlich, ähnlich wie gemäß Fig. 1, wo alle Seiten gleichmäßig beschnitten sind, gleichmäßig beschnitten, hier enden also alle drei Lagen 3, 5, 7 bündig.

Gezeigt ist ferner eine weitere Fließhilfe 1, die auf Stoß angeordnet ist, und die identisch im Aufbau ist. Mehrere Fließhilfen können also benachbart zueinander gestückelt respektive aneinander angesetzt werden.

Fig. 5 zeigt eine weitere Ausführungsform einer erfindungsgemäßen Fließhilfe 1, wobei für gleiche Bauteile gleiche Bezugszeichen verwendete werden. Diese Fließhilfe 1 besteht lediglich aus zwei Lagen, nämlich dem Abstandsgewebe 3 mit seiner unterseitig aufgebrachten Schicht aus dem Klebemittel 9, sowie der Trennfolie 5 mit den Perforationsöffnungen 8. Gestrichelt dargestellt ist auch hier die Möglichkeit, einen überstehenden Gewebeabschnitt 18 seitens des Abreißgewebes 3 vorzusehen. Bei dieser Erfindungsausgestaltung ist die Fließhilfe 1 also zweilagig. Eine solche Fließhilfe kann mitunter bereits ausreichend sein, um ein Faserverbundbauteil herzustellen, nämlich z. B. dann, wenn eine großflächige Verteilung nicht erforderlich ist.

Demgegenüber zeigt Fig. 6 eine Prinzipdarstellung einer weiteren, lediglich zweilagigen Ausführungsform einer Fließhilfe 1, die hier wiederum ein Abreißgewebe 3 mit der aufgebrachten Schicht aus dem Klebemittel 9 sowie mit dem ebenfalls angedeuteten, überstehenden Gewebeabschnitt 18 umfasst. Als zweite Lage ist hier die dreidimensionale Lage 7 in Form eines dreidimensionalen Kunststoffgewebes, Kunststoffgewirkes oder Kunststoffnetzes vorgesehen. Eine solche zweilagige Fließhilfe 1 wird beispielsweise verwendet, wenn eine nicht mit dem Harz verhaftende Trennfolie nicht benötigt wird, da die Fließhilfe 1 nach dem Infiltrationsprozess komplett, also inklusive Abreißgewebe 3, abgerissen wird.

## Patentansprüche

1. Fließhilfe für eine Infusionsanordnung zum Infiltrieren eines Harzes in ein Fasermaterial, die wenigstens zwei aufeinander liegende, verschiedenartige und harzdurchlässige Lagen (2, 4, 6) umfasst, die im Bereich ihrer aufeinander liegenden Flächen miteinander verbunden sind, **dadurch gekennzeichnet, dass** eine Lage ein Abreißgewebe (3) ist, das an seiner frei liegenden Fläche abschnittsweise oder vollflächig mit einem Klebemittel (9), das mit einer abziehbaren Schutzlage belegt ist, oder das nach der Montage der Fließhilfe aktivierbar ist, belegt ist.

2. Fließhilfe nach Anspruch 1, **dadurch gekennzeichnet, dass** die weitere Lage (4, 6) eine Trennfolie (5) oder eine dreidimensionale Lage (7) ist.

3. Fließhilfe nach Anspruch 1 oder 2, **dadurch gekennzeichnet, dass** drei aufeinander liegende, verschiedenartige und harzdurchlässige Lagen (2, 4, 6) vorgesehen sind, wobei eine erste Lage (6) eine dreidimensionale Lage (7) ist, wobei die zweite Lage (4) eine mit der dreidimensionalen Lage (7) im Bereich ihrer aufeinander liegenden Flächen miteinander verbundene Trennfolie (5) ist, und wobei die dritte (2) Lage das Abreißgewebe (3) ist, das mit der Trennfolie (5) verbunden ist.

4. Fließhilfe nach einem der vorangehenden Ansprüche, **dadurch gekennzeichnet, dass** das aktivierbare Klebemittel (9) thermisch oder durch Druck aktivierbar ist.

5. Fließhilfe nach einem der vorangehenden Ansprüche, **dadurch gekennzeichnet, dass** das Abreißgewebe (3) ein textiles Kunststoffgewebe ist.

6. Fließhilfe nach Anspruch 5, **dadurch gekennzeichnet, dass** das Kunststoffgewebe aus PE, HDPE, LDPE, PA, PP, PES, PTFE, FEP, ETFE, PFA, PSU, PPS oder einem Polyimid ist.

7. Fließhilfe nach einem der vorangehenden Ansprüche, **dadurch gekennzeichnet, dass** die dreidimensionale Lage (7) ein textiles Kunststoffgewebe, Kunststoffgewirke oder Kunststoffnetz ist.

8. Fließhilfe nach Anspruch 7, **dadurch gekennzeichnet, dass** das Kunststoffgewebe, Kunststoffgewirke oder Kunststoffnetz aus PE, HDPE, LDPE, PA, PP, PES, PTFE, FEP, ETFE, PFA, PSU, PPS oder einem Polyimid ist.

9. Fließhilfe nach einem der vorangehenden Ansprüche, **dadurch gekennzeichnet, dass** die Trennfolie (5) eine Kunststofffolie ist.

10. Fließhilfe nach Anspruch 9, **dadurch gekennzeichnet, dass** die Kunststofffolie aus PE, HDPE, LDPE, PA, PP, PES, PTFE, FEP, ETFE, PFA, PSU, PPS oder einem Polyimid ist.

11. Fließhilfe nach einem der vorangehenden Ansprüche, **dadurch gekennzeichnet, dass** die Trennfolie (5) perforiert ist.

12. Fließhilfe nach einem der vorangehenden Ansprüche, **dadurch gekennzeichnet, dass** die Fließhilfe (1) an allen Seiten gleichmäßig beschnitten ist, oder dass an einer oder mehrere Seiten das Abreißgewebe (3) sich über die eine oder die beiden weiteren Lagen hinaus erstreckt und die Fließhilfe (1) an den übrigen Seiten beschnitten ist.

13. Infusionsanordnung umfassend einen formgebenden Träger (11, 12) zur Aufnahme des zu infiltrierenden Fasermaterials (13), eine Umhüllung (14) zum vakuumdichten Abdecken des Trägers (11, 12) nach Auf- oder Einbringen des Fasermaterials (13), sowie eine mit dem Fasermaterial (13) über die Klebeschicht (9) zu verbindende oder verbundene Fließhilfe (1) nach einem der vorangehenden Ansprüche.

14. Verfahren zur Infiltration eines Fasermaterials mit einem Harz zur Herstellung eines Faserverbundbauteils mittels einer Infusionsanordnung nach Anspruch 13, wobei auf dem auf den Träger auf- oder eingebrachten Fasermaterial die Fließhilfe nach einem der Ansprüche 1 bis 12 über das Klebemittel aufgebracht und fixiert ist, wonach nach Erzeugen eines Vakuums im Innenraum der Infusionsanordnung und/oder unter Überdruck ein Harz eingebracht und über die Fließhilfe verteilt und zum Fasermaterial geführt wird.

## Claims

1. Flow aid for an infusion arrangement for infiltrating a resin into a fiber material, which comprises at least two different resin-permeable plies (2, 4, 6), which lie atop one another and are joined to one another in the region of their faces lying atop one another, **characterized in that** one ply is a peel ply (3) which on its exposed face is covered sectionally or over the full area with an adhesive agent (9), which is covered with a removable protective ply, or which can be activated after the mounting of the flow aid.

2. Flow aid according to Claim 1, **characterized in that** the further ply (4, 6) is a release film (5) or a three-dimensional ply (7).

3. Flow aid according to Claim 1 or 2, **characterized in that** three different resin-permeable plies (2, 4, 6) lying atop one another are provided, with a first ply (6) being a three-dimensional ply (7), with the second ply (4) being a release film (5) joined to the three-dimensional ply (7) in the region of their faces lying atop one another, and with the third (2) ply being the peel ply (3) which is joined to the release film (5).

4. Flow aid according to any of the preceding claims, **characterized in that** the activatable adhesive agent (9) can be activated thermally or by pressure.

5. Flow aid according to any of the preceding claims, **characterized in that** the peel ply (3) is a polymeric textile fabric.

6. Flow aid according to Claim 5, **characterized in that** the polymeric fabric is made of PE, HDPE, LDPE, PA, PP, PES, PTFE, FEP, ETFE, PFA, PSU, PPS or a polyimide.

7. Flow aid according to any of the preceding claims, **characterized in that** the three-dimensional ply (7) is a polymeric textile fabric, knitted polymeric structure or polymeric mesh.

8. Flow aid according to Claim 7, **characterized in that** the polymeric fabric, knitted polymeric structure or polymeric mesh is made of PE, HDPE, LDPE, PA, PP, PES, PTFE, FEP, ETFE, PFA, PSU, PPS or a polyimide.

9. Flow aid according to any of the preceding claims, **characterized in that** the release film (5) is a polymeric film.

10. Flow aid according to Claim 9, **characterized in that** the polymeric film is made of PE, HDPE, LDPE, PA, PP, PES, PTFE, FEP, ETFE, PFA, PSU, PPS or a polyimide.

11. Flow aid according to any of the preceding claims, **characterized in that** the release film (5) is perforated.

12. Flow aid according to any of the preceding claims, **characterized in that** the flow aid (1) is uniformly trimmed on all sides, or **in that** on one or more sides the peel ply (3) extends beyond the one or two further plies and the flow aid (1) is trimmed on the remaining sides.

13. Infusion arrangement comprising a shaping support (11, 12) for accommodating the fiber material (13) to be infiltrated, an envelope (14) for covering the support (11, 12) in a vacuum-tight manner after application or introduction of the fiber material (13), and a flow aid (1) according to any of the preceding claims, which is joined or can be joined to the fiber material (13) via the adhesive layer (9).

14. Method for infiltrating a fiber material with a resin for producing a fiber composite component by means of an infusion arrangement according to Claim 13, wherein the flow aid according to any of Claims 1 to 12 is applied and fixed via the adhesive agent to the fiber material introduced or applied to the support, and, after a vacuum has been generated in the interior of the infusion arrangement, and/or under superatmospheric pressure, a resin is introduced and is distributed and passed to the fiber material via the flow aid.

## Revendications

1. Auxiliaire d'écoulement pour un ensemble d'infusion pour l'infiltration d'une résine dans un matériau fibreux, qui comporte au moins deux couches (2, 4, 6) superposées, de type différent et perméables à la résine, qui sont reliées les unes aux autres dans la zone de leurs surfaces superposées, **caractérisé en ce qu'**une couche est un tissu d'arrachage (3), qui est garni sur sa surface exposée en sections ou sur l'ensemble de la surface avec un agent adhésif (9), qui est garni avec une couche de protection pelliculable, ou qui est activable après le montage de l'auxiliaire d'écoulement.

2. Auxiliaire d'écoulement selon la revendication 1, **caractérisé en ce que** l'autre couche (4, 6) est une feuille de séparation (5) ou une couche tridimensionnelle (7).

3. Auxiliaire d'écoulement selon la revendication 1 ou 2, **caractérisé en ce que** trois couches (2, 4, 6) superposées, de type différent et perméables à la résine sont prévues, une première couche (6) étant une couche tridimensionnelle (7), la deuxième couche (4) étant une feuille de séparation (5) reliée avec la couche tridimensionnelle (7) dans la zone de leurs surfaces superposées, et la troisième couche (2) étant le tissu d'arrachage (3), qui est relié avec la feuille de séparation (5).

4. Auxiliaire d'écoulement selon l'une quelconque des revendications précédentes, **caractérisé en ce que** l'agent adhésif activable (9) est activable thermiquement ou par pression.

5. Auxiliaire d'écoulement selon l'une quelconque des revendications précédentes, **caractérisé en ce que** le tissu d'arrachage (3) est un tissu en matière plastique textile.

6. Auxiliaire d'écoulement selon la revendication 5, **caractérisé en ce que** le tissu en matière plastique est en PE, HDPE, LDPE, PA, PP, PES, PTFE, FEP, ETFE, PFA, PSU, PPS ou un polyimide.

7. Auxiliaire d'écoulement selon l'une quelconque des revendications précédentes, **caractérisé en ce que** la couche tridimensionnelle (7) est un tissu en matière plastique textile, un tricot en matière plastique ou un treillis en matière plastique.

8. Auxiliaire d'écoulement selon la revendication 7, **caractérisé en ce que** le tissu en matière plastique, le tricot en matière plastique ou le treillis en matière plastique est en PE, HDPE, LDPE, PA, PP, PES, PTFE, FEP, ETFE, PFA, PSU, PPS ou un polyimide.

9. Auxiliaire d'écoulement selon l'une quelconque des revendications précédentes, **caractérisé en ce que** la feuille de séparation (5) est une feuille en matière plastique.

10. Auxiliaire d'écoulement selon la revendication 9, **caractérisé en ce que** la feuille en matière plastique est en PE, HDPE, LDPE, PA, PP, PES, PTFE, FEP, ETFE, PFA, PSU, PPS ou un polyimide.

11. Auxiliaire d'écoulement selon l'une quelconque des revendications précédentes, **caractérisé en ce que** la feuille de séparation (5) est perforée.

12. Auxiliaire d'écoulement selon l'une quelconque des revendications précédentes, **caractérisé en ce que** l'auxiliaire d'écoulement (1) est coupé de manière uniforme sur tous les côtés, ou **en ce que**, sur un ou plusieurs côtés, le tissu d'arrachage (3) s'étend au-delà de l'autre ou des deux autres couches, et l'auxiliaire d'écoulement (1) est coupé sur les côtés restants.

13. Ensemble d'infusion comprenant un support façonnant (11, 12) pour la réception du matériau fibreux à infiltrer (13), une enveloppe (14) pour le recouvrement étanche au vide du support (11, 12) après l'application ou l'introduction du matériau fibreux (13), ainsi qu'un auxiliaire d'écoulement (1) selon l'une quelconque des revendications précédentes à relier ou relié avec le matériau fibreux (13) par l'intermédiaire de la couche adhésive (9).

14. Procédé pour l'infiltration d'un matériau fibreux avec une résine pour la fabrication d'un composant composite fibreux au moyen d'un ensemble d'infusion selon la revendication 13, dans lequel l'auxiliaire d'écoulement selon l'une quelconque des revendications 1 à 12 est appliqué et fixé sur le matériau fibreux appliqué ou introduit sur le support par l'intermédiaire de l'agent adhésif, après quoi, après la génération d'un vide dans la chambre intérieure de l'ensemble d'infusion et/ou sous une surpression, une résine est introduite et répartie par l'intermédiaire l'auxiliaire d'écoulement et acheminée jusqu'au matériau fibreux.
